# EUROPEAN PATENT APPLICATION

(11) **EP 1 274 085 A1**
(43) Date of publication of application: **08.01.2003**
(21) Application number: 02253820.1
(22) Date of filing: 30.05.2002
(51) Int. Cl.: G11B 23/50

(54) **Blade-type disk cleaner system**

(30) Priority: 04.06.2001 US 873484
(71) Applicant: Plasmon LMS, Inc., Colorado Springs, CO 80907 (US)
(72) Inventor: Warmenhoven, Coen J, Colorado Springs, CO 80919-3874 (US)
(74) Representative: Fenlon, Christine Lesley

(57) **Abstract**

A blade-type disk cleaner system for removing fine dust or greasy contamination from disks (105) is disclosed. In one embodiment, the blade-type disk cleaner includes a cleaning blade (155) having a length of approximately the radius of the disk (105), for scraping debris off the disk (105). The cleaning blade (155) is positioned to contact the surface of the disk (105) at approximately 30 to 45 degree contact angle (225), and the top angle (230) of the cleaning blade (155) is approximately 15 to 25 degrees. A control unit is coupled to the cleaning blade (155) and is used to raise and lower the blade (155) to the rotating disk (105). In some embodiments, a dust collection element is used to collect debris scraped from the disk by the cleaning blade (155). In one embodiment, a smaller blade (155) is used. A radial movement mechanism moves the cleaning blade (155) across the radius of the rotating disk (105), allowing non-flat disks (105) to be cleaned. A cleaning pad is used to clean debris from the cleaning blade (155). A brush can be added to the system so that the radial movement mechanism first moves the brush across the radius of the disk (105) and then, if necessary, moves the cleaning blade (155) across the disk's (105) radius. The entire disk cleaning system can be integrated within the disk drive unit.

## Description

The present invention relates to disks for disk drives, and more particularly to cleaning contamination from such disks.

Since the launch in 1982 of the audio CD, optical disks have become a very popular storage media due to their durability, random access features, and the high capacities that can be achieved on a single removable disk. The computerization of businesses has steadily increased the amount of data that is processed. As more data is processed, the amount of data which must be stored increases as well. To meet the need of this ever increasing amount of data, cost-effective data storage is desired. To remain competitive and to meet the needs for storage, increasing the disk capacity is a paramount development goal for optical drive products. (See, P. Asthana , B. I. Finkelstein , and A. A. Fennema, "Rewritable optical disk drive technology," IBM Journal of Research and Development, Vol. 40, No. 5 (1996))

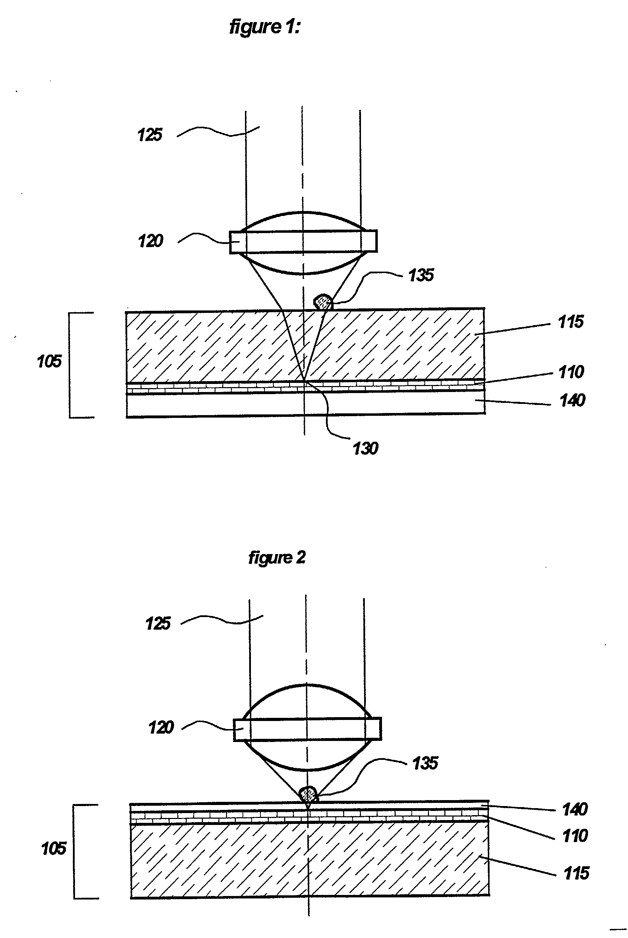

In general, optical disks can withstand some limited amounts of contamination. Figure 1 of the accompanying drawings, demonstrates how a disk can still function properly even with the introduction of a dust particle on the disk's surface. Figure 1 shows a cut-away side view of a previously-proposed disk (105) having a substrate (115), an active layer (110) and a cover layer (140). In Figure 1, a dust particle (135) is on the disk's surface. However, the dust particle blocks only a small portion of the focused laser beam and so the dust particle does not interfere with the reading from, or the writing to, the disk.

As disks are engineered to provide greater capacity, dust and other contaminants are more problematic. One method of increasing an optical disk's capacity is by using a stronger object lens. Such a stronger lens must be placed closer to the optical media. Dust becomes a more pressing problem in these situations because a dust particle now interferes with a greater portion of the focused laser beam. If enough of the laser beam is obstructed, data may be inaccessible. Thus, while optical disks were once lauded for their durability and ability to resist small amounts of contaminants, the super capacity drives now on the market are significantly less resistant to the deleterious effects of contamination. As a result, contamination must either be prevented from ever reaching the disk or a way must be devised to clean the disk once it is contaminated.

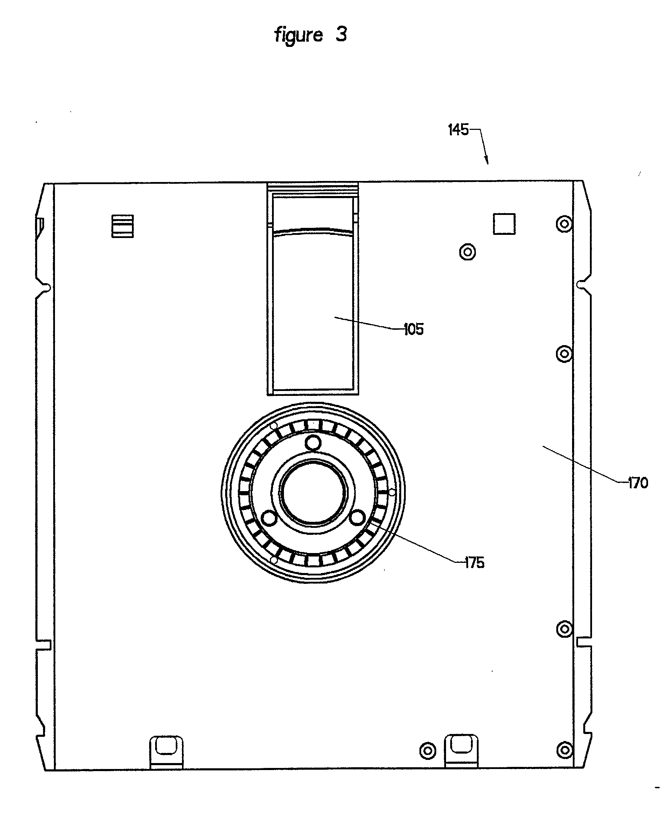

There have been various attempts to deal with disk contamination. One previously-proposed method has been to package the disk within a disk cartridge. Such a cartridge (145) is shown in Figure 3 of the accompanying drawings. Disk cartridges include a door assembly which is opened by the disk drive so that the disk (105) within the cartridge can be accessed. Of course, as soon as the door assembly is opened, the disk is exposed to airborne dust.

Since even with a cartridge, dust can still damage the disk, other systems have used pressurized air to blow dust from the disk surface. Still other systems have used a series of bristles to physically brush the disk, thus removing dust.

Although each of these systems may reduce some accumulation of dust from the disk, they are not capable of removing fine dust which is quite small, perhaps less than about 50 µm. Although such debris is minute in size, as disk capacities increase, even such small contaminants are problematic. These cleaning systems also fail to remove contamination which is sticky or otherwise adheres to the disk. For example, when a computer user handles an optical disk with his hands, greasy fingerprint marks can be deposited on the disk's surface. Air blowing and brushing systems are not effective. Some previously-proposed disk cleaning systems use alcohol or other liquids to try to "wash" sticky impurities from the disk. However, these systems introduce other disadvantages: the cleaning fluids must be replaced; the cleaning fluids can inadvertently infiltrate and damage the disk drive; and, the cleaning fluids cannot be formulated to adequately dissolve all potential types of debris. A final disadvantage to these systems is that they are stand-alone cleaning systems. Thus, the user must remove the disk from the disk drive and insert it into a cleaning device.

It is desirable to provide an improved system for cleaning impurities from the surface of a disk, which is effective in removing both fine dust particles as well as fingerprint marks and other greasy or adhesive compounds. The new system should desirably not pose a risk of damaging the mechanical components of the disk drive, or of scratching or otherwise harming the disk itself. The new system should desirably have a long active life without the need for replenishment as is needed with liquid disk cleaners. Finally, the system should preferably be integrated as a single unit with the disk drive rather than be a separate, stand-alone system.

According to an embodiment of the present invention there is provided a disk cleaner system, for removing fine dust or greasy contamination from disks, including a cleaning blade having a length of approximately the radius of the disk, for scraping debris off the disk, the cleaning blade being positioned to contact the surface of the disk at a low contact angle (preferably 30° to 45°). The cleaning blade has a top angle of preferably 15° to 25°. A control unit may be coupled to the cleaning blade and used to raise and lower the blade to the rotating disk. In some embodiments, a dust collection element is used to collect debris scraped from the disk by the cleaning blade. In another embodiment, a smaller blade is used. A radial movement mechanism moves the cleaning blade across the radius of the rotating disk, allowing non-flat disks to be cleaned. A cleaning pad is used to clean debris from the cleaning blade. A brush can be added to the system so that the radial movement mechanism first moves the brush across the radius of the disk and then, if necessary, moves the cleaning blade across the disk's radius. A cleaning system embodying the present invention can be implemented within a disk drive unit.

Reference will now be made, by way of example, to the accompanying drawings, in which:

Figure 1 (described above) is a simplified side view of a previously-proposed disk and access device, where the disk has a relatively thick substrate;

Figure 2 is a simplified side view of a disk and access device, where the disk has a relatively thin cover layer;

Figure 3 (described above) is a top view of a previously-proposed disk cartridge with a door assembly;

Figures 4A and 4B are cross-sectional views of a disk with an air-jet or brush cleaner;

Figure 5 is a cross-sectional view of a disk being cleaned by an angled blade cleaner embodying the present invention;

Figures 6A and 6B are perspective views of a blade control unit which raises and lowers the long cleaning blade in an embodiment of the present invention to the surface of the disk;

Figure 7 is a perspective view of another embodiment of the present invention in which a brush is attached to the cleaning blade;

Figure 8 is a cross-sectional view of a rotating disk being scraped by a cleaning blade used in an embodiment of the present invention, in which the debris is collected by a dust collection element; and

Figure 9 is a perspective view of a radial movement mechanism which moves a smaller blade or blade/brush combination in an embodiment of the present invention across the radius of the rotating disk.

A blade-type cleaner embodying the present invention can be implemented within a disk drive. Throughout the drawings, an attempt has been made to label corresponding elements with the same reference numbers. The reference numbers include:

| **Reference Number** | **Description** |
|---|---|
| 105 | disk |
| 110 | active layer |
| 115 | substrate |
| 120 | lens |
| 125 | beam |
| 130 | laser spot |
| 135 | dust particle |
| 140 | cover layer |
| 145 | disk cartridge |
| 150 | door assembly |
| 155 | cleaning blade |
| 160 | air jet nozzle |
| 165 | brush |
| 170 | cartridge shell |
| 175 | hub |
| 180 | upper half of cartridge shell |
| 185 | lower half of cartridge shell |
| 190 | gear motor |
| 195 | tension spring |
| 200 | dust collection element |
| 205 | radial movement mechanism |
| 210 | cleaning/parking pad |
| 215 | excenter |
| 220 | blade control unit |
| 225 | contact angle |
| 230 | top angle |

Referring to the drawings, Figures 1 and 2 illustrate the problems created by dust within a disk system. As discussed above, Figure 1 shows a cut-away side view of a previously-proposed disk 105, having a substrate 115, an active layer 110 and a cover layer 140. In Figure 1, the substrate is on top, as is common in today's CD and DVD products.

The disk 105 can be any type of optical disk, such as an audio CD, a CD-ROM, DVD, DVD-ROM, DVD-RAM, DVD-RW, MO, or a WORM disk. The substrate 115 is commonly a polycarbonate plastic. In the optical disk industry, the plastic portion of the substrate 115 can be "pre-recorded" by being stamped with millions of pits corresponding to the binary representation of the data or information stored on the disk. This could include computer data, audio tracks, digitalized video, etc. If not "pre-recorded," the optical disk can be later written to with a laser writing head.

A thin layer of aluminum or other material is applied, coating the plastic substrate 115 and forming the active layer 110. Then a lacquer (or similar material) is applied as the cover layer 140, which offers protection to the active layer 110. Usually the substrate 115 is relatively thick - perhaps 1.2 mm for CD and MO-type of disks, and 0.6 mm for DVD-type of disks. In comparison, the active layer 110 is perhaps between 50 and 100 nm for CDs, MO-type disks, and DVD-type disks.

The substrate 115, active layer 110 and cover layer 140 can obviously be made of other substances. For example, in the CD-ROM and WORM industries, the substrate 115 can also be formed from PMMA or glass; the active layer 110 can be organic die instead of aluminum. The cover layer 140 can be UV curing lacquer as from D.S.M. or Dai Nippon, for example.

In use, the disk 105 is inserted into a disk drive, which has a drive motor and an access device. The drive motor rotates the disk and the access device is positionable with respect to the rotating disk. The access device includes components which direct a laser or other light beam 125 through a prism/lens assembly 120 to create a focused laser spot 130 on the disk 105 in order to write to, or read from, the disk.

Dust and other debris can accumulate on the disk 105. As explained below, this dust can have various effects on the disk system. Again, Figure 1 shows a dust particle 135 on the substrate 115 of the disk 105. In Figure 1, the dust particle 135 blocks only a small portion of the focused laser beam and so the laser spot 130 is not completely affected.

As the computer industry grows there is a continuous need for increased data storage capacity. One way to achieve increased storage capacity on a disk 105 is to reduce the size of the laser spot 130 on the active layer 110. This can be accomplished by using a stronger lens 120. However, a stronger lens 120 needs to be closer to the active layer 110, requiring that the substrate 115 be thinner. For example, a DVD has a substrate 115 of only 0.6 mm.

In the future, the substrate 115 may be required to be just 0.1 mm thick. However, such a thin substrate 115 creates problems. The sum of the substrate layer 115 thickness and the free working distance is the total distance from the lens surface to the active layer 110. To get the disk to have a higher storage capacity, the "pit" size burned in the disk 105 to record binary data needs to become smaller. To read and write such a smaller "pit" the spot size of the laser beam 130 on the active layer needs to become smaller. The formula is expressed as "spot size equals the wavelength of the laser light divided by the numerical aperture of the lens." Thus, for a given laser wavelength (830 nm (infra-red) for a CD, 635 nm (red) for a DVD, and possibly 405 nm (violet) for future systems), the only way to get a smaller spot size is to use a stronger lens. But since the focal distance of a stronger lens is shorter, the lens needs to be placed closer to the active layer 110. For a CD, this total distance between the lens and the active layer 110 is about 2 mm. For a DVD, this total distance is about 1 mm. For future systems this total distance will become about 0.2 mm.

In future systems, the top layer on the active layer 110 may be 0.1 mm and there may be only 0.1 mm air between the top layer 110 and the lens 120. During manufacturing of the disk 105, a substrate of some mechanical strength is needed. A CD substrate of 1.2 mm and even a DVD substrate of 0.6 mm offers enough strength. However, a future system's substrate of only 0.1 mm does not offer enough mechanical strength. Such a disk would bend or curl under its own weight. Therefore, for manufacturing reasons, the substrate 115 and cover 140 layers may be switched in future systems. In such a technique, instead of reading/writing through the substrate 115, future systems (where the lens needs to be about 0.2 mm from the active layer) will read/write through the cover layer 140. Figure 2 shows a possible example of a future standard of a DVR disk 105 with a thinner cover layer 140, where the substrate 115 and the cover 140 layers are switched.

With the thinner cover layer 140, dust particles 135 are more problematic because a dust particle 135 will interfere with a greater percentage of the focused laser beam 125. If enough of the laser beam 125 is hindered, the portion of the disk 105 beneath the dust particle 135 will not be accessible.

Because dust and debris affect disks, disks are usually used in a cartridge. Figure 3 shows a disk 105 in a disk cartridge 145. The disk cartridge 145 includes a door assembly 150 (not shown) on a cartridge shell 170, which is opened in Figure 3. The disk cartridge 145 also includes a hub 175 which allows the disk drive to spin the disk 105. In some embodiments, disk cartridges 145 are created by joining an upper half of a cartridge shell 180 to a lower half of a cartridge shell 185.

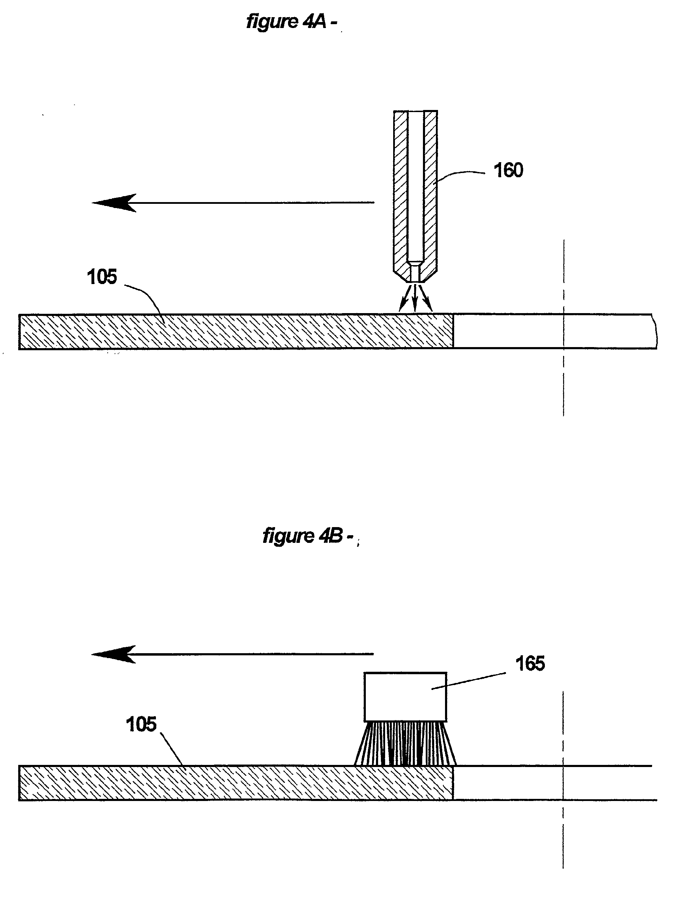

In high-end optical disk applications, such as with a 12-inch laser disk system, the disk 105 may be made of a glass substrate 115. A glass surface is much harder than the traditional polycarbonate substrate. To clean the glass surface, various previously-proposed "auto-clean" systems have been employed. Figures 4A and 4B show cross-sectional views of two cleaning devices operating with a disk 105. In Figure 4A, an air jet nozzle 160 attached to an air pump is placed above the surface of the rotating disk 105. In Figure 4B, a brush 165 is similarly placed. The brush 165, or the air jet nozzle 160, make a sweep over the disk surface - usually from inner to outer radius. During this sweep, typically, debris larger than 50 µm is removed by the brush 165, or the air jet nozzle 160. However, such auto-clean systems cannot effectively remove debris smaller than about 50 µm. Nor are they effective in removing sticky debris, such as finger prints. Such systems have usually been implemented as stand-alone cleaning units, apart from the disk drive itself.

In an embodiment of the present invention, a knife-like blade 155 is used to remove even sticky and small debris from disks 105. Previously-proposed cleaning systems did not incorporate such blades 155 because of the high risk in damaging the disk 105. By contrast, an embodiment of the present invention offers a safe method of scraping contamination from the surface of the disk. In addition, a blade-cleaning system embodying the present invention is implemented as an integrated component to a disk drive.

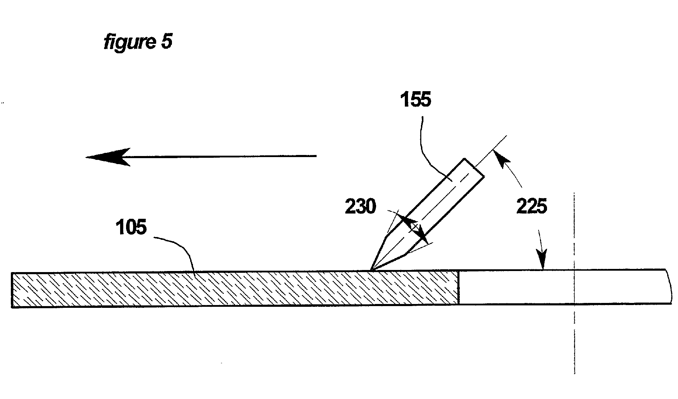

Figure 5 shows a cross-sectional view of a disk 105 and a cleaning blade 155 used in an embodiment of the present invention. The cleaning blade 155 is made of a hard material, such as steel, tungsten, ceramic, or other material. To effectively scrape debris from the disk, without harming the disk, the cleaning blade 155 contacts the glass surface at a low contact angle 225. Figure 5 shows the blade 155 with a contact angle 225 of approximately 45°. Although the blade can perform effectively at various low contact angles 225, preferably the blade's contact angle 225 should be approximately 30° to 45°. The blade needs to be at a low contact angle to keep the forces between the disk 105 and the blade 155 low. With a steep contact angle 225, the blade 155 might push the disk 105 too hard downwards, causing the disk 105 to disengage from the spindle hub 175. In addition, the spindle motor might not have the power to overcome the high friction force between the disk 105 and blade 155 in case of such a steep contact angle 225.

Figure 5 also shows the blade's top angle 230 to be small as well. Preferably, the cleaning blade's top angle 230 is between 15 and 25 degrees. The blade's top angle 230 needs to be small so that debris gets lifted off the disk surface. If the top angle 230 is too large, (such as 90 degrees), debris would get pushed harder down on the disk surface instead of being lifted off.

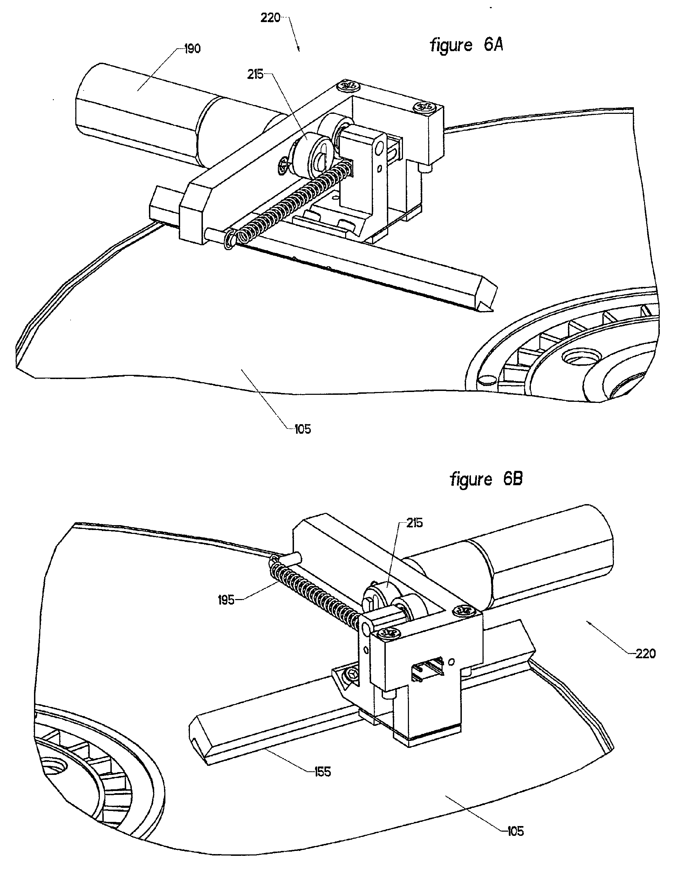

One embodiment of the present invention is shown in Figures 6A and 6B, where the cleaning blade 155 is long - reaching from approximately the inner to the outer radius of the disk 105. Here, a blade control unit 220 (which may be integrated within the disk drive unit) is used to lower the cleaning blade to the surface of the disk and to raise it after cleaning. The blade control unit 220 includes a gear motor 190, a shaft, excenter 215, tension spring 195 and a supporting frame. Several manufacturers provide gear motors 190 which could be used in the blade control unit 220. For example, Japanese manufacturers CANON and COPAL offer such motors.

The gear motor 190 must be able to carefully engage the cleaning blade 155 to the spinning disk 105. In Figures 6A and 6B, the gear motor 190 drives a shaft with an excenter 215 so that the blade 155 is slowly engaged. Once the cleaning blade 155 is aligned with the disk 105, tension spring 195 is used to apply an adequate amount of force to the blade 155 so that debris is scraped from the disk 105 without damaging the disk. Once the disk has been scraped - which may take just a few seconds - the gear motor 190 (which remains running) lifts the cleaning blade 155 from the disk 105.

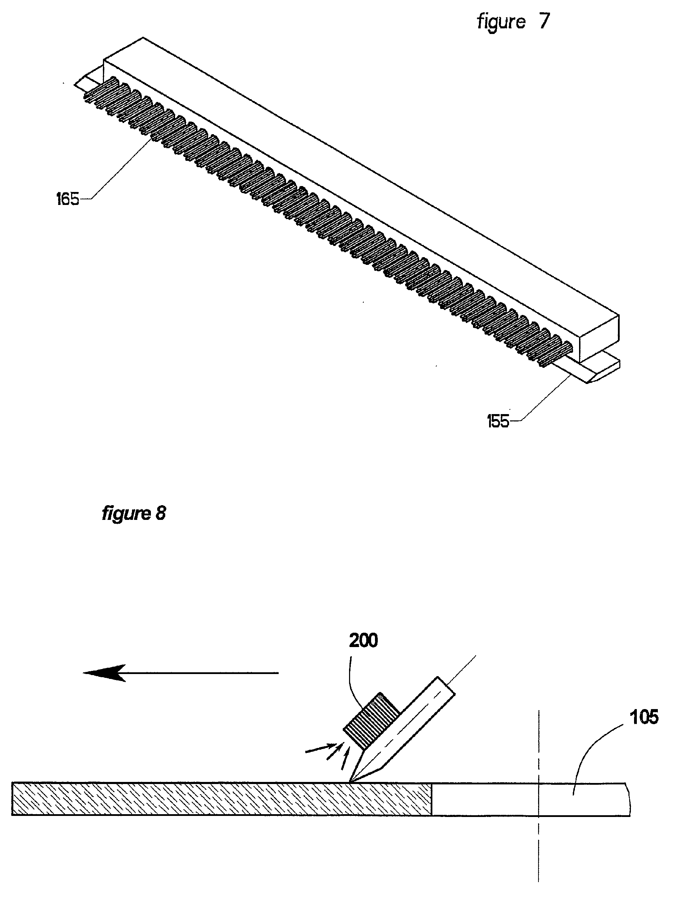

Figure 7 shows another embodiment of the blade cleaner, which may also be integrated within the disk drive unit. Here, the cleaning blade 155 is combined with a brush 165. This configuration allows the disk 105 to be cleaned two ways. When the disk is operating normally, the gear motor 190 maintains the cleaning blade 155 and brush 165 in a neutral position. When required, the gear motor 190 can move to a setting so that only the brush 165 touches the disk 105. After cleaning with this method, if the error rate during reading or writing is still unacceptably high, the gear motor 190 can be moved further to another position so that the cleaning blade 155 touches the disk 105 as well. After a specified cleaning period, the brush 165 or the brush/blade combination are lifted from the disk 105, back to their neutral positions. Such a dual mode disk cleaner can extend the life of the cleaning blade 155 and also reduce the risk of the cleaning blade 155 scratching the disk 105.

Brush-enabled cleaning systems have been previously proposed, which were "form" controlled, meaning that the brush is placed a given distance from the disk and the brushing force comes from the bending of the brush's fibers. Preferably, in contrast, a blade cleaner embodying the present invention is "force" controlled, meaning that the spring mechanism controls the force between the blade and the disk to maintain efficient and safe cleaning.

Figure 8 illustrates how a dust collection element 200 can be applied to the cleaning blade 155 to collect the scraped debris. Dust collection element 200 can be an electrostatic tissue, line of adhesive tape, grease, or other sticky substance having a relatively long active life.

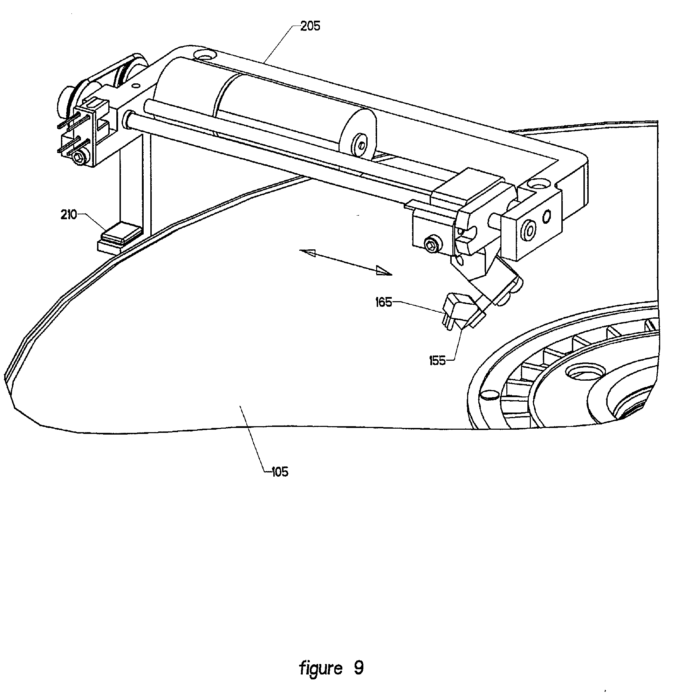

The previously described embodiments may not function properly if the disk 105 is non-flat. Figure 9 shows an embodiment which can be used in these circumstances. In Figure 9, the cleaning blade 155 is smaller. A radial movement mechanism 205 is configured to move the cleaning blade 155 from the inner radius to the outer radius of the disk 105. This method of cleaning pushes the debris over the outer radius of the disk 105. As the cleaning blade 155 traverses the disk radius, it can adjust to varying altitudes of the non-flat disk surfaces.

Figure 9 also shows how a pad 210 can be used to clean the cleaning blade 155 before or after use. In addition, a small brush 165 can be combined with the cleaning blade, as was described previously. One cleaning procedure using such a blade cleaner is to park the cleaning blade 155 on the pad 210 or other safe location. When the error rate is too high during reading or writing (or for some other reason) the cleaning process can be initiated. The disk's rotation is stopped. The radial movement mechanism 205 moves the cleaning blade 155 from its parked location to the inner radius. Disk rotation is restarted and the cleaning blade 155 moves to the outer radius, cleaning the disk's surface as it progresses. At the end of this cycle, the pad 210 may collect the debris and/or clean the cleaning blade 155. Or, as previously discussed, a dust collection element 200 can be attached to the cleaning blade 155 so that debris is collected throughout the process. In one embodiment of this system, it takes approximately five seconds for the cleaning blade 155 to move from the inner radius to the outer radius for a 12-inch glass disk spinning at 1,000 rpm.

In practice, it is preferable that the long blade embodiment (shown in Figures 6A and 6B) exerts a force of 8-12 Newtons on the disk 105, and that the embodiment having the small blade that moves from inner to outer radius (shown in Figure 9) exerts 0.5-2 Newtons on the disk 105. Experiments for a glass 12-inch disk have shown that preferably, the blade material should not be harder than the glass of the disk. For example, both type of blades can be made from a steel rule manufactured by Simonds Notting Inc.

The Simonds steel rule is soft enough so that the long blade does not scratch the surface of the disk. Experiments have also shown that in the small blade embodiment, the blade 155 should be kept moving across the radius of the disk; if the blade 155 stands still while the disk is spinning, the blade can scratch the disk 105.

From the foregoing description, it will be evident that there are a number of changes, adaptations and modifications of the present invention which come within the province of those skilled in the art. For example: the cleaning blade 155 can be made of other materials; the disk 105 to be cleaned could be made of some material other than glass (such as polycarbonate with a hard top coating applied); the brush 165, blade 155, and/or dust collection element 200 could be of varying sizes and configurations; etc. It is intended that all such variations not departing from the spirit of the invention be considered as within the scope thereof.

## Claims

1. A blade-type disk cleaner for a rotating disk, comprising:
a cleaning blade having a length of approximately the radius of the rotating disk, for scraping debris off the disk,
wherein the cleaning blade is substantially rigid and positioned to contact the surface of the rotating disk at a predetermined contact angle, and
wherein the top angle of the cleaning blade is predetermined.

2. The blade-type disk cleaner of claim 1, wherein the predetermined contact angle is approximately between 30 to 45 degrees.

3. The blade-type disk cleaner of claim 1 or 2, wherein the predetermined top angle is approximately between 15 to 25 degrees.

4. The blade-type disk cleaner of claim 1, 2 or 3, wherein the cleaning blade is constructed of material containing steel, tungsten, or ceramic.

5. The blade-type disk cleaner of any preceding claim, further comprising a dust collection element coupled to the cleaning blade, for collecting the debris scraped off the disk by the cleaning blade.

6. The blade-type disk cleaner of claim 5, wherein the dust collection element is double-sided tape.

7. The blade-type disk cleaner of claim 5, wherein the dust collection element is an electrostatic material.

8. A disk cleaning system for a rotating disk, comprising:
a rigid cleaning blade having a length of approximately the radius of the disk, for scraping debris off the disk, wherein the cleaning blade is substantially rigid and is positioned to contact the surface of the disk at a predetermined contact angle, and
wherein the top angle of the cleaning blade is predetermined; and
a blade control unit coupled to the cleaning blade, for raising and lowering the cleaning blade to the surface of the rotating disk.

9. The disk cleaning system of claim 8, further comprising:
a brush having a length of approximately the radius of the disk, for brushing debris off the disk, wherein the brush is coupled to the blade control unit;
wherein the blade control unit has a plurality of cleaning settings;
wherein a first cleaning setting maintains the brush and the cleaning blade in a neutral position;
wherein a second cleaning setting engages the brush to the surface of the disk so that debris is brushed from the disk; and
wherein a third cleaning setting engages the cleaning blade to contact the surface of the disk so that the cleaning blade scrapes debris.

10. The disk cleaning system of claim 8 or 9, further comprising a dust collection element coupled to the cleaning blade for attracting debris scraped from the disk.

11. A disk cleaning system for a rotating disk, comprising:
a rigid cleaning blade having a length substantially smaller than the radius of the disk, for scraping debris off the disk, wherein the cleaning blade is positioned to contact the surface of the disk at a predetermined contact angle, and wherein the top angle of the cleaning blade is predetermined; and
a radial movement mechanism coupled to the cleaning blade, for raising and lowering the blade to the surface of the rotating disk, and for moving the cleaning blade across the radius of the rotating disk.

12. The disk cleaning system of claim 11, further comprising a brush having a length substantially smaller than the radius of the disk, for brushing debris from the surface of the disk, wherein the brush is coupled to the radial movement mechanism; and
wherein the radial movement mechanism has a plurality of cleaning settings;
wherein a first cleaning setting maintains the brush and the cleaning blade in a neutral position;
wherein a second cleaning setting engages the brush to the surface of the disk so that debris is brushed as the radial movement mechanism moves the brush across the radius of the rotating disk; and
wherein a third cleaning setting engages the cleaning blade to the surface of the disk so that the cleaning blade scrapes debris as the radial movement mechanism moves the cleaning blade across the radius of the rotating disk.

13. The disk cleaning system of claim 11 or 12, further comprising a cleaning pad for cleaning scraped debris from the cleaning blade.

14. The disk cleaning system of any one of claims 8 to 13, wherein the predetermined contact angle is approximately between 30 to 45 degrees.

15. The disk cleaning system of any one of claims 8 to 14, wherein the predetermined top angle is approximately between 15 to 25 degrees.

16. A method for cleaning a rotating disk using a blade, the steps comprising:
providing a rigid cleaning blade having a length substantially smaller than the radius of the disk, for scraping debris off the disk, wherein the cleaning blade is positioned to contact the surface of the disk at a predetermined contact angle, and wherein the top angle of the cleaning blade is predetermined;
providing a radial movement mechanism coupled to the cleaning blade, for raising and lowering the blade to the surface of the rotating disk, and for moving the cleaning blade across the radius of the rotating disk;
determining that the cleaning should commence;
activating the radial movement mechanism to a first cleaning setting to move the cleaning blade to the surface of the rotating disk;
traversing the cleaning blade across the radius of the disk; and
activating the radial movement mechanism to a neutral setting to remove the cleaning blade from the surface of the rotating disk.

17. The method of claim 16, further comprising the steps of:
providing a brush coupled to the radial movement mechanism for brushing debris from the rotating disk;
activating the radial movement mechanism to a second cleaning setting to move the brush to the surface of the rotating disk; and
activating the radial movement mechanism to a third setting to remove the brush from the surface of the rotating disk.

18. The method of claim 16 or 17, further comprising the steps of:
providing a cleaning pad for removing debris from the cleaning blade; and
activating the radial movement mechanism to a third cleaning setting to move the cleaning blade to the cleaning pad.

19. The method of claim 16, 17 or 18, wherein the predetermined contact angle is approximately between 30 to 45 degrees.

20. The method of any one of claims 16 to 19, wherein the predetermined top angle is approximately between 15 to 25 degrees.

21. A disk drive, comprising:
a drive motor for rotating a disk;
an access unit for accessing data on the disk;
a network interface for connecting the disk drive to a computer or computer network;
a rigid cleaning blade having a length of approximately the radius of the disk, for scraping debris off the disk, wherein the cleaning blade is substantially rigid and is positioned to contact the surface of the disk at a predetermined contact angle, and
wherein the top angle of the cleaning blade is predetermined;
a blade control unit coupled to the cleaning blade, for raising and lowering the cleaning blade to the surface of the rotating disk; and
a housing to accommodate the drive motor, the access unit, the cleaning blade, the blade control unit, and the network interface.

22. The disk drive of claim 21, further comprising:
a brush having a length of approximately the radius of the disk, for brushing debris off the disk, wherein the brush is coupled to the blade control unit;
wherein the blade control unit has a plurality of cleaning settings;
wherein a first cleaning setting maintains the brush and the cleaning blade in a neutral position;
wherein a second cleaning setting engages the brush to the surface of the disk so that debris is brushed from the disk; and
wherein a third cleaning setting engages the cleaning blade to contact the surface of the disk so that the cleaning blade scrapes debris.

23. A disk drive, comprising:
a drive motor for rotating a disk;
an access unit for accessing data on the disk;
a network interface for connecting the disk drive to a computer or computer network;
a rigid cleaning blade having a length substantially smaller than the radius of the disk, for scraping debris off the disk, wherein the cleaning blade is substantially rigid and is positioned to contact the surface of the disk at a predetermined contact angle, and wherein the top angle of the cleaning blade is predetermined;
a radial movement mechanism coupled to the cleaning blade, for raising and lowering the blade to the surface of the rotating disk, and for moving the cleaning blade across the radius of the spinning disk; and
a housing to accommodate the drive motor, the access unit, the cleaning blade, the radial movement mechanism, and the network interface.

24. The disk drive of claim 23, further comprising:
a brush having a length substantially smaller than the radius of the disk, for brushing debris off the disk, wherein the brush is coupled to the blade control unit;
wherein the radial movement mechanism has a plurality of cleaning settings;
wherein a first cleaning setting maintains the brush and the cleaning blade in a neutral position;
wherein a second cleaning setting engages the brush to the surface of the disk so that debris is brushed as the radial movement mechanism moves the brush across the radius of the rotating disk; and
wherein a third cleaning setting engages the cleaning blade to the surface of the disk so that the cleaning blade scrapes debris as the radial movement mechanism moves the cleaning blade across the radius of the rotating disk.

25. The disk drive of any one of claims 21 to 24, further comprising a dust collection element coupled to the cleaning blade for attracting debris scraped from the disk.

26. The disk drive of any one of claims 21 to 25, wherein the predetermined contact angle is approximately between 30 to 45 degrees.

27. The disk drive of any one of claims 21 to 26, wherein the predetermined top angle is approximately between 15 to 25 degrees.
